# EUROPÄISCHE PATENTSCHRIFT

(11) **EP 1 671 532 B1**
(45) Veröffentlichungstag und Bekanntmachung des Hinweises auf die Patenterteilung: **09.04.2008**
(21) Anmeldenummer: 05112176.2
(22) Anmeldetag: 14.12.2005
(51) Int. Cl.: A01F 29/20

(54) **Häckseltrommel**
Forage chopping cylinder
Rotor hacheur

(30) Priorität: 18.12.2004 DE 102004061070
(43) Veröffentlichungstag der Anmeldung: 21.06.2006
(73) Patentinhaber: Deere & Company, Moline, IL 61265-8098 (US)
(72) Erfinder: Pakura, Franz, 18059, Ziesendorf (DE)
(74) Vertreter: Holst, Sönke

(56) Entgegenhaltungen:
- EP-A- 0 683 971
- DE-A1- 2 737 683
- DE-U1- 8 813 953

## Beschreibung

### Stand der Technik

Die Erfindung betrifft eine Häckseltrommel, mit einer um eine Drehachse in Rotation versetzbaren Oberfläche, auf der Messerhalter verteilt sind, deren Längserstreckung mit der Drehachse einen Winkel einschließt, an denen jeweils ein Befestigungsbereich eines Messers angebracht ist, das den Befestigungsbereich und einen in einer Schneidkante auslaufenden Trennbereich aufweist.

Bei selbstfahrenden Feldhäckslern werden üblicherweise mit lösbaren Messern ausgestattete, offene oder geschlossene Häckseltrommeln eingesetzt, um aufgenommenes Erntegut in kleine Stücke zu häckseln, die insbesondere als Viehfutter dienen. Auf dem Trommelkörper sind Messerhalter befestigt, die wiederum die Messer tragen.

Gebräuchliche Messerhalter sind an Häckseltrommeln parallel oder geneigt zur Drehachse der Häckseltrommmel angeordnet. Im Winkel (d. h. geneigt) zur Drehachse angeordnete Messerhalter werden benutzt, um mit daran befestigten Messern bei einer Drehbewegung der Häckseltrommel einen so genannten ziehenden Schnitt zu realisieren, d. h., die Schneidkanten der Messer bilden einen Winkel zur Drehrichtung der Häckseltrommel von ungleich 90° und schließen mit der Kante von parallel zur Drehachse der Häckseltrommel angeordneten Gegenschneiden einen Winkel von ungleich 0° ein. Die in sich flachen Messer haben eine in Drehrichtung vorlaufende Schneidkante, die sich parallel zu ihrem am Messerhalter fixierten Befestigungsabschnitt erstreckt (DE 88 13 953 U), oder die Messer sind in sich spiralförmig gekrümmt (US 3 805 660 A). Es wurde auch vorgeschlagen, trapezförmige, abgekröpfte Messer an sich parallel zur Drehachse der Häckseltrommel erstreckenden Messerhaltern anzubringen, um einen ziehenden Schnitt zu erzielen (EP 0 683 971 A). Eine Häckseltrommel mit sich parallel zur Drehachse der Häckseltrommel erstreckenden Messerhaltern und Schneidkanten der Messer ist beispielsweise in der DE 27 37 683 A beschrieben. Sie vollführen einen so genannten geraden oder hackenden Schnitt.

Ein Nachteil eines ziehenden Schnittes ist es, dass eine Kraftkomponente entsteht, die versucht, das zu schneidende Material aus der Öffnung, die durch die Schneidkante des Messers und Kante der Gegenschneide gebildet wird, herauszudrängen. Dieser allgemein bekannte Effekt des Herausdrängens des zu schneidenden Materiales aus den wie eine Schere wirkenden Schneidorganen wächst mit zunehmender Größe des so genannten Zügigkeitswinkels, also der Schrägstellung von Messerschneidkante bezüglich der Rotorbewegungsrichtung bzw. der Kante der Gegenschneide, mit weiterem Abrunden der Messerschneiden und der Gegenschneidenkanten z. B. durch Verschleiß und mit sinkendem Reibungskoeffizienten des zu schneidenden Materiales, wenn sich z. B. der Feuchtigkeitsgehalt des zu schneidenden Stoffes ändert. Wird das zu schneidende Material zwangsweise zwischen schräg zur Bewegungsrichtung angeordnete Schneidkanten und Gegenschneidkanten gebracht und dort gehalten, dann wird dem Herausdrängen des Materiales entgegengewirkt. Ist diese zwangsweise Zuführung und Fixierung des zu schneidenden Materials nicht gegeben, dann kann das zu schneidende Material der herausdrängenden Kraft durch Bewegung zur Seite ausweichen. Dann erfolgt nur ein teilweises Durchschneiden des Materials oder kein Schnitt. Unter praktischen Bedingungen hat das zur Folge, dass die reale mittlere Länge des abgeschnittenen Materials sich bei konstanten Zuführgeschwindigkeiten, d. h. bei konstant eingestellten Häcksellängen, zu einer größeren mittleren Häcksellänge im gehäckselten Haufwerk hin verschiebt.

Trotz der genannten Problematik fand der ziehende Schnitt in den letzten Dekaden vielfach Anwendung, da er bei vielen Erntegutarten, wie Mais, ein gutes Schneidergebnis erzielt. Bei anderen Erntegutarten, wie Gras, ist sein Schneidergebnis oft weniger gut. Ein Austausch der Häckseltrommel in eine Ausführungsform mit sich parallel zur Drehachse erstreckenden Messerhaltern und Schneidkanten erweist sich als aufwändig.

### Aufgabe der Erfindung

Die der Erfindung zu Grunde liegende Aufgabe wird darin gesehen, eine Häckseltrommel bereitzustellen, die sich auf einfache Weise zwischen ziehendem und hackendem Schnitt umstellen lässt und bei der für den gebräuchlicheren ziehenden Schnitt relativ einfach und preisgünstig herstellbare Messer verwendbar sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Häckseltrommel umfasst eine geschlossene oder offene Oberfläche, die im Betrieb um die Drehachse der Häckseltrommel rotiert. Auf der Oberfläche sind Messerhalter verteilt, deren Längsachse mit der Drehachse einen Winkel einschließt. Die Messerhalter dienen zur Anbringung des Befestigungsabschnitts jeweils eines Messers, das den Befestigungsbereich und einen in einer Schneidkante auslaufenden Trennbereich aufweist. Werden an den Messerhaltern flache Messer mit einer Schneidkante befestigt, die sich parallel zu ihrem Befestigungsabschnitt erstreckt, erhält man demnach den gebräuchlichen ziehenden Schnitt. Es wird vorgeschlagen, zumindest ein Messer derart zu formen, dass sich seine Schneidkante parallel zur Drehachse der Häckseltrommel erstreckt.

Auf diese Weise erreicht man bei einer Häckseltrommel, die mit preiswerten und einfach herstellbaren, in sich flachen und rechteckigen Messern zur Erzielung eines ziehenden Schnitts bestückbar ist, durch Anbringung geeigneter Messer einen geraden Schnitt. Die Häckseltrommel lässt sich somit schnell und einfach an die Ernte unterschiedlicher Arten von Erntegut anpassen. Beim geraden Schnitt wird die Menge der Häckselteilchen im gehäckselten Haufwerk, die eine größere Länge als Teilchenlängen haben, die durch die vorgegebenen Konstruktions- und Betriebsparameter bestimmt werden, gegenüber dem ziehenden Schnitt reduziert. Das führt demnach zu einer exakteren Häcksellängenverteilung mit weniger Überlängen und damit zu einer besseren Schnitt- oder Häckselqualität des zerkleinerten Haufwerkes insgesamt. Die gleichmäßigere Längenverteilung der Häckselteilchen im Häckselhaufwerk mit weniger Überlängen wirkt sich auch positiv auf nachfolgende Prozesse aus, wie z. B. auf die erzielte Dichte des gehäckselten Gutes im Silo, um eine gute Silagequalität herzustellen, oder auf das Vermischen des Gehäckselten mit anderen Stoffen. Die Schneidkanten der Messer müssen nicht in besonderer Fertigungsweise ausgeführt werden, denn das zu schneidende Material wird nicht durch die Schrägstellung der Schneidkanten hinausgedrängt. Damit vereinfacht sich beispielsweise auch das Wiederherstellen der Schärfe der Messer nach dem Abrunden der Schneidkanten infolge üblichen Verschleißes z. B. durch Nachschleifen erheblich.

Ein weiterer Vorteil liegt darin, dass bereits vorhandene, in Serie gefertigte Häckseltrommeln mit gegenüber der Drehachse im Winkel angeordneten Messerhaltern mit ebenfalls bereits vorhandenen und in Serie produzierten, abgewinkelten Messern, die bisher an ebenfalls in Serie produzierten Häckseltrommeln mit parallel zur Drehachse orientierten Messerhaltern verwendet werden, kombiniert werden können, um einen geraden Schnitt zu erzielen.

Ein zur Erzielung eines hackenden Schnitts geeignetes Messer zeichnet sich dadurch aus, dass die Trennbereichebene, in der sich der Trennbereich des Messers erstreckt, und die Befestigungsbereichebene, in der sich der Befestigungsbereich erstreckt, einen derartigen Winkel einschließen, dass die Trennbereichebene sich näherungsweise parallel zu einer Tangente an die Häckseltrommel erstreckt, und dass der Abstand zwischen der Schneidkante und der Befestigungsbereichebene an der Seite des Messers, die an der in der Drehrichtung der Häckseltrommel vorlaufenden Seite des Messerhalters anliegt, kürzer als an der Seite des Messers ist, die an der in der Drehrichtung der Häckseltrommel nachlaufenden Seite des Messerhalters anliegt. Ein derartiges Messer ist an sich aus der EP 0 683 971 A bekannt, deren Offenbarung durch Verweis mit in die vorliegenden Unterlagen aufgenommen wird.

### Ausführungsbeispiel

In den Zeichnungen sind zwei nachfolgend näher beschriebene Ausführungsbeispiele der Erfindung dargestellt. Es zeigt:
- Fig. 1: einen Feldhäcksler mit einer Häckseltrommel,
- Fig. 2: eine perspektivische, teilexplodierte Ansicht der Häckseltrommel und der Messer von vorn, und
- Fig. 3: eine Ansicht einer zweiten Ausführungsform einer Häckseltrommel.

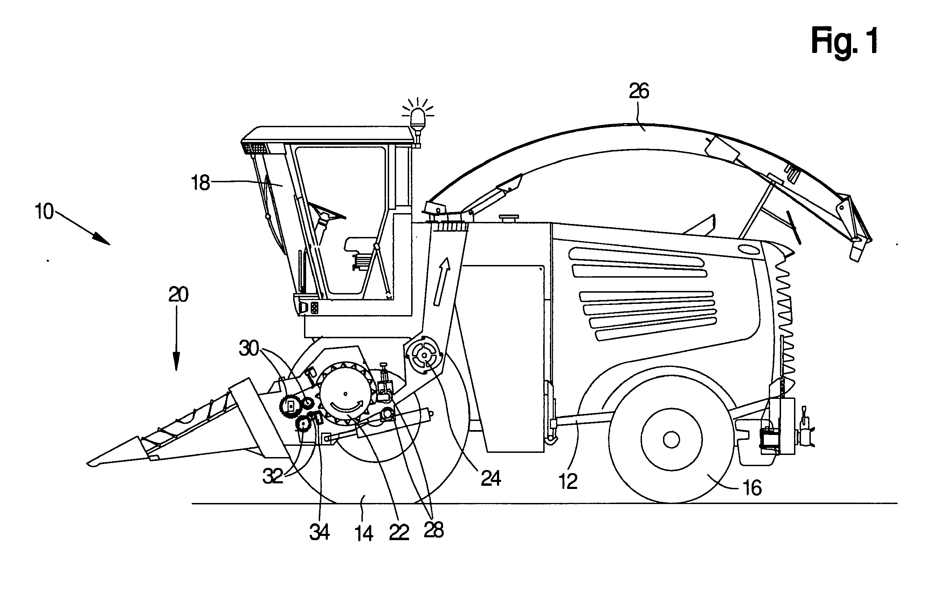

Eine in der Figur 1 gezeigte Erntemaschine 10 in der Art eines selbstfahrenden Feldhäckslers baut sich auf einem Rahmen 12 auf, der von angetriebenen vorderen Rädern 14 und lenkbaren rückwärtigen Rädern 16 getragen wird. Die Bedienung der Erntemaschine 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendes Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über eine in ihrer Position verstellbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

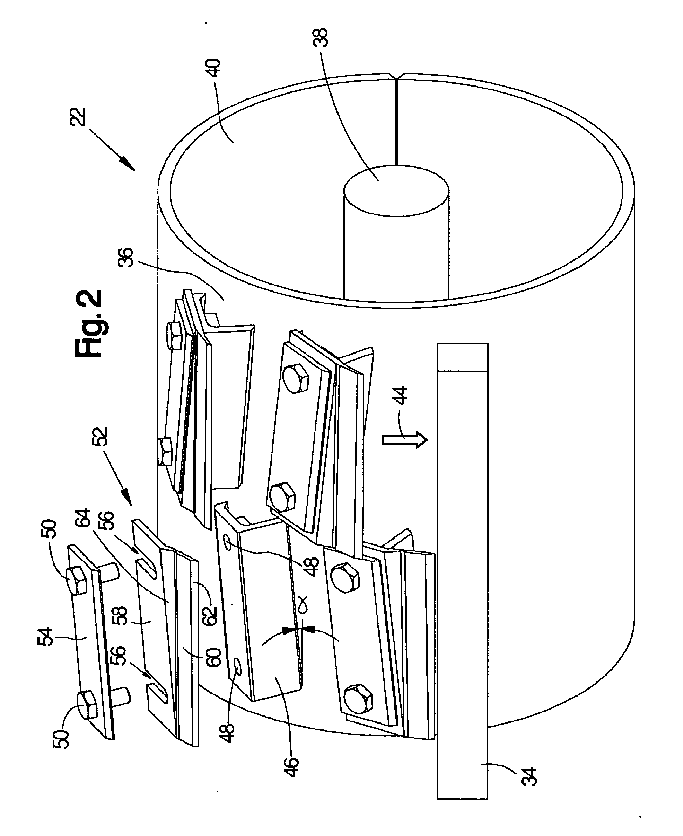

Die Häckseltrommel 22 wirkt mit einer Gegenschneide 34 zusammen, um das aufgenommene Erntegut zu zerkleinern. Die Häckseltrommel 22 ist in der Figur 2 in einer perspektivischen Frontansicht detaillierter dargestellt. Sie umfasst eine geschlossene, mantelförmige Oberfläche 36, die durch Seitenwände 40 mit einer koaxialen Drehachse 38 verbunden ist. Um die Oberfläche 36 sind dachförmige Messerhalter 42 verteilt. Die Längserstreckung der Messerhalter 42 schließt mit der Drehachse 38 jeweils einen Winkel α von etwa 10° ein. In der in Drehrichtung der Häckseltrommel 22, die in Richtung des Pfeils 44 verläuft, nachlaufenden Fläche 46 der Messerhalter 42 sind Bohrungen 48 eingebracht, durch die sich Schrauben 50 zur Befestigung der Messer 52 erstrecken. Die Schrauben 50 werden von außen her durch Löcher in Druckplatten 54, in Schlitze 56 in Befestigungsbereichen 58 der Messer 52, durch die Bohrungen 48 und in Gewindeplatten (nicht gezeigt) eingeführt, die sich an der Innenseite der Messerhalter 42 befinden und zum Halten der Messer 52 an den Messerhaltern 42 dienen.

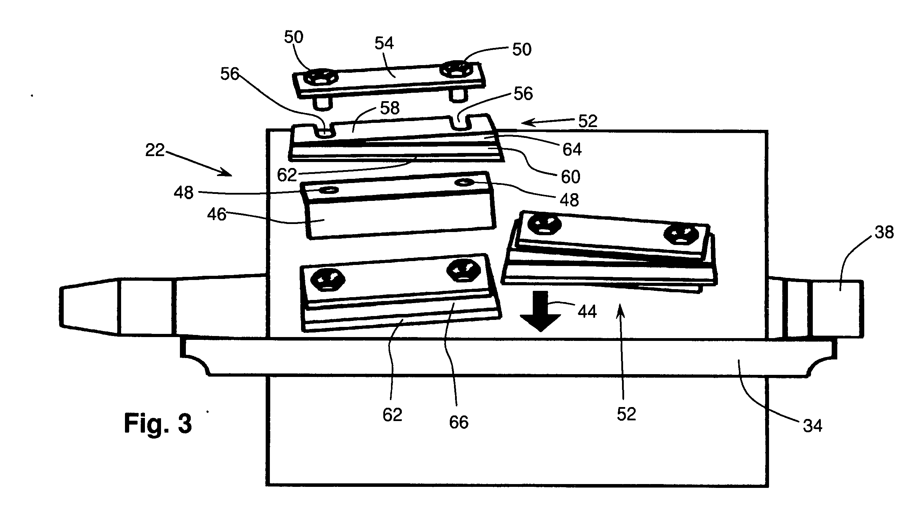

An den Messerhaltern 42 können in sich flache, rechteckige Messer 66 (s. Figur 3) befestigt werden, die dann einen ziehenden Schnitt bewirken.

Wie anhand der Figur 2 erkennbar ist, schließen in der dargestellten Ausführungsform der Messer 52 der Befestigungsbereich 58 und ein in einer Schneidkante 62 auslaufender Trennbereich 60, betrachtet man das Messer 52 von oben her, einen Winkel ein, der dem Winkel α entspricht. Außerdem verläuft der Trennbereich 60 in einer Trennbereichebene, die gegenüber der Befestigungsbereichebene des Befestigungsbereichs 58 in Richtung auf die Drehachse 38 zu nach innen abgewinkelt ist. Das Messer 52 ist demnach zwischen dem Trennbereich 60 und dem Befestigungsbereich 58 in sich tordiert. Zwischen dem Befestigungsbereich 58 und dem Trennbereich 60 ist ein S-förmiger Krümmungsbereich 64 mit zwei gegensinnigen Krümmungen vorhanden. In der Draufsicht (Figur 2) ist der Krümmungsbereich 64 dreieckig (keilförmig), um den Winkel α zu realisieren. Die Trennbereichebene verläuft näherungsweise parallel zu einer Tangente an die benachbarte Oberfläche 36.

Durch die beschriebene Form der Messer 52 erreicht man, dass die Schneidkante 62 parallel zur Drehachse 38 verläuft. Dadurch erzielt man einen hackenden Schnitt, der sich für manche Erntegutsorten besser als ein ziehender Schnitt eignet. Die dargestellten Messer 52 sind an sich aus der EP 0 683 971 A bekannt, dienen dort aber zur Erzielung eines ziehenden Schnitts mit zur Drehachse 38 parallelen Messerhaltern 42.

Es können an der Häckseltrommel 22 auch beide erwähnten Arten von Messern, d. h. rechteckige Messer 66 mit parallel zum Befestigungsbereich verlaufender Schneidkante 62 zur Realisierung eines ziehenden Schnitts und abgewinkelte Messer 52, in seitlicher und/oder Umfangsrichtung gemischt angeordnet sein, beispielsweise alternierend, s. Figur 3. Es wäre auch denkbar, an einer Häckseltrommel die Messerhalter alternierend parallel zur Drehachse und im Winkel zur Drehachse anzuordnen und mit jeweils gleichartigen Messern auszustatten, die entweder rechteckig und flach sind oder, wie oben beschrieben, zwischen dem Befestigungsbereich und dem Trennbereich in sich tordiert sind und bei denen der Befestigungsbereich und der Trennbereich in Draufsicht einen Winkel einschließen.

## Patentansprüche

1. Häckseltrommel (22), mit einer um eine Drehachse (38) in Rotation versetzbaren Oberfläche (36), auf der Messerhalter (42) verteilt sind, deren Längserstreckung mit der Drehachse (38) einen Winkel (α) einschließt, an denen jeweils ein Befestigungsbereich (58) eines Messers (52) angebracht ist, das den Befestigungsbereich (52) und einen in einer Schneidkante (62) auslaufenden Trennbereich (60) aufweist, **dadurch gekennzeichnet, dass** zumindest ein Messer (52) derart geformt ist, dass sich die Schneidkante (38) parallel zur Drehachse (38) erstreckt.

2. Häckseltrommel (22) nach Anspruch 1, **dadurch gekennzeichnet, dass** der Befestigungsbereich (58) des Messers (52) sich in einer Befestigungsbereichebene erstreckt, dass der Trennbereich des Messers (52) sich in einer Trennbereichebene erstreckt, dass die Trennbereichebene und die Befestigungsbereichebene einen derartigen Winkel einschließen, dass die Trennbereichebene sich parallel zu einer Tangente an die Häckseltrommel (22) erstreckt, und dass der Abstand zwischen der Schneidkante (62) und der Befestigungsbereichebene an der Seite des Messers (52), die an der in der Drehrichtung (44) der Häckseltrommel (22) vorlaufenden Seite des Messerhalters (42) anliegt, kürzer als an der Seite des Messers (52) ist, die an der in der Drehrichtung (44) der Häckseltrommel (22) nachlaufenden Seite des Messerhalters (42) anliegt.

3. Häckseltrommel (22) nach Anspruch 1 oder 2, **dadurch gekennzeichnet, dass** zusätzlich ein Messer (66) mit parallel zum Messerhalter (46) verlaufender Schneidkante (62) an einem Messerhalter (46) ist.

## Claims

1. Forage chopping cylinder (22), with a surface (36) which can be rotated about an axis of rotation (38) and on which cutter holders (42) are distributed, the longitudinal extent of which encloses an angle (α) with the axis of rotation (38) and to which a respective fastening region (58) of a cutter (52) is fitted, the cutter having the fastening region (58) and a separating region (60) ending in a cutting edge (62), **characterized in that** at least one cutter (52) is shaped in such a manner that the cutting edge (62) extends parallel to the axis of rotation (38).

2. Forage chopping cylinder (22) according to Claim 1, **characterized in that** the fastening region (58) of the cutter (52) extends in a fastening region plane, **in that** the separating region of the cutter (52) extends in a separating region plane, **in that** the separating region plane and the fastening region plane enclose such an angle that the separating region plane extends parallel to a tangent to the forage chopping cylinder (22), and **in that** the distance between the cutting edge (62) and the fastening region plane on that side of the cutter (52) which bears against that side of the cutter holder (42) which is in front in the direction of rotation (44) of the forage chopping cylinder (22) is shorter than on that side of the cutter (52) which bears against that side of the cutter holder (42) which trails in the direction of rotation (44) of the forage chopping cylinder (22) .

3. Forage chopping cylinder (22) according to Claim 1 or 2, **characterized in that** a cutter (66) with a cutting edge (62) running parallel to the cutter holder (46) is additionally provided on a cutter holder (46).

## Revendications

1. Cylindre de hachage (22), comportant une surface (36), qui est apte à être entraînée en rotation autour d'un axe de rotation (38) et sur laquelle sont répartis des porte-lames (42), dont la longueur délimite avec l'axe de rotation (38) un angle (α) et sur lesquels est attachée au moins une zone de fixation (58) d'une lame de coupe (52), qui comporte la zone de fixation (58) et une zone de séparation (60) se terminant par une arête de coupe (62), **caractérisé en ce qu'**au moins une lame de coupe (52) est formée de telle sorte que l'arête de coupe (62) est orientée parallèlement à l'axe de rotation (38).

2. Cylindre de hachage (22) selon la revendication 1, **caractérisé en ce que** la zone de fixation (58) de la lame de coupe (52) se situe dans un plan de fixation, **en ce que** la zone de séparation de la lame de coupe (52) s'étend dans un plan de séparation, **en ce que** le plan de séparation et le plan de fixation délimitent un angle tel que le plan de séparation est orienté parallèlement à une tangente sur le cylindre de hachage (22), et **en ce que** la distance entre l'arête de coupe (62) et le plan de fixation sur le côté de la lame de coupe (52), qui est en appui sur le côté avant du porte-lames (42), par référence au sens de rotation (44) du cylindre de hachage (22), est plus petite que celle sur le côté de la lame de coupe (52), qui est en appui contre le côté arrière du porte-lames (42), par référence au sens de rotation (44) du cylindre de hachage (22).

3. Cylindre de hachage (22) selon la revendication 1 ou 2, **caractérisé en ce qu'**une lame de coupe (66) avec une arête de coupe (62) parallèle au porte-lames (46), est montée, en plus, sur un porte-lames (46).
